# EUROPÄISCHE PATENTSCHRIFT

(11) **EP 1 820 990 B1**
(45) Veröffentlichungstag und Bekanntmachung des Hinweises auf die Patenterteilung: **24.12.2008**
(21) Anmeldenummer: 07001713.2
(22) Anmeldetag: 26.01.2007
(51) Int. Cl.: F16D 13/75, F16D 48/06

(54) **Verfahren und Vorrichtung zum Nachstellen einer in einem Fahrzeugantriebsstrang befindlichen, von einem Aktor betätigten Reibungskupplung**
Method and device for regulating a friction clutch in a vehicle power transmission and activated by an actuator
Procédé et dispositif destinés au réglage d'un embrayage à friction actionné par un actionneur et se trouvant dans une gaine d'engrenage de véhicule

(30) Priorität: 16.02.2006 US 773927 P
(43) Veröffentlichungstag der Anmeldung: 22.08.2007
(73) Patentinhaber: LuK Lamellen und Kupplungsbau Beteiligungs KG, 77815 Bühl (DE)
(72) Erfinder: Whitmer, Jeremy, 44107 Lakewood Ohio (US); Shellhammer, Brad, 44215 Chippewa Lake Ohio (US); Roberts, Ben, 44667 Orrville Ohio (US); Smith, David, 44281 Wadsworth Ohio (US)

(56) Entgegenhaltungen:
- EP-A- 1 072 459
- EP-A- 1 482 197
- EP-A1- 1 455 106
- DE-A1- 19 921 920

## Beschreibung

Die Erfindung betrifft ein Verfahren und eine Vorrichtung zum Nachstellen einer in einem Fahrzeugsantriebsstrang befindlichen, von einem Aktor betätigten Reibungskupplung.

Reibungskupplungen, insbesondere trocken arbeitende Reibungskupplungen müssen wegen des Verschleißes des oder der Reibbeläge hin und wieder nachgestellt werden. Dies geschieht meist über eine in die Reibungskupplung integrierte Nachstelleinrichtung, die die Beziehung zwischen der Stellung eines Betätigungsgliedes und dem von der Kupplung übertragbaren Moment, die sich bei einem Verschleiß des oder der Reibbeläge ändert, zumindest annähernd wiederherstellt.

In modernen Kraftfahrzeugen werden zunehmend automatisierte bzw. von einem Aktor gesteuerte Kupplungen eingesetzt, die den Fahrer entlasten und den Einsatz automatisierter Schaltgetriebe ermöglichen. In jüngster Zeit finden Parallelschalt- bzw. Doppelkupplungsgetriebe Verwendung in Kraftfahrzeugen, mit denen sich Zugkraft unterbrechungsfrei schalten lässt und deren Wirkungsgrad gegenüber mit Wandlern arbeitenden Planetengetrieben verbessert ist.

Solche Parallelschaltgetriebe enthalten zwei Teilgetriebe, mit denen die ungeraden bzw. die geraden Gänge geschaltet werden, wobei beim Fahren mit einem ungeraden Gang eine dem Teilgetriebe mit den ungeraden Gängen zugeordnete Kupplung geschlossen ist und die dem Teilgetriebe mit geraden Gängen zugeordnete Kupplung geöffnet ist, so dass in diesem Teilgetriebe ein gerader Gang vorgewählt bzw. eingelegt werden kann, auf den durch Öffnen der dem Teilgetriebe mit den ungeraden Gängen zugeordneten Kupplung und Schließen der dem Teilgetriebe mit geraden Gängen zugeordneten Kupplung umgeschaltet werden kann. Da zumindest, wenn in beiden Teilgetrieben ein Gang eingelegt ist, nicht beide Kupplungen gleichzeitig geschlossen sein dürfen, sind diese Kupplungen meist als zugedrückte Kupplungen ausgebildet, d.h. als Kupplungen, die mittels des Aktors gegen die Kraft einer Öffnungsfeder geschlossen werden und die von der Öffnungsfeder bei nicht energiebeaufschlagtem Aktor selbsttätig ihre Offenstellung einnehmen.

Für eine genaue Steuerbarkeit dieser Kupplungen ist eine Verschleißkompensation bzw. Verschleißnachstellung erforderlich. Diese Verschleißnachstellung muss selbsttätig erfolgen und ohne dass der Fahrkomfort beeinträchtigt wird.

Aus der EP 1 482 197 A1 ist ein Verfahren zum Erkennen von Verschleiß einer automatisierten in Betätigungsrichtung geöffneten Reibungskupplung bekannt. Die EP 1 072 459 A1 offenbart ein Verfahren zum Anfahren eines Kraftfahrzeugs mit einer automatisierten Reibungskupplung. Die EP 1 455 106 A1 offenbart ein Ausrücksystem einer Reibungskupplung mit einem Hebelsystem zum Beaufschlagen der Reibungskupplung in Schließrichtung.

Der Erfindung liegt die Aufgabe zugrunde, ein Verfahren zum Nachstellen einer in einem Fahrzeugantriebsstrang befindlichen, von einem Aktor betätigten Reibungskupplung anzugeben, das ohne Beeinträchtigung des Fahrkomforts, d.h. ohne dass die Fahrzeuginsassen das bemerken, durchführbar ist. Der Erfindung liegt weiter die Aufgabe zugrunde, eine Vorrichtung zur Durchführung eines solchen Verfahrens anzugeben.

Der das Verfahren betreffende Teil der Erfindungsaufgabe wird mit den Merkmalen des Anspruchs 1 gelöst, die mit den Merkmalen der Ansprüche 2 bis 4 vorteilhaft weitergebildet werden.

Der auf eine Vorrichtung gerichtete Teil der Erfindungsaufgabe wird mit den Merkmalen des Anspruchs 5 gelöst, die mit denen des Anspruchs 6 vorteilhaft weitergebildet werden.

Ein erfindungsgemäßes Verfahren zum Nachstellen einer in einem Fahrzeugantriebsstrang befindlichen, von einem Aktor betätigen Reibungskupplung, welche Reibungskupplung eine Nachstelleinrichtung enthält, die bei Bewegen eines Betätigungsgliedes über einen Verstellbereich hinaus eine einen Reibbelagverschleiß ausgleichende Nachstellung der Kupplung herbeiführt, welches Verfahren folgende Schritte enthält:
- Feststellen, ob sich der Fahrzeugantriebsstrang in einem Zustand befindet, in dem ein Nachstellen der Kupplung möglich ist,
- Feststellen, ob ein Nachstellen der Kupplung erforderlich ist,
- Bewegen des Betätigungsgliedes über den Sollverstellbereich hinaus, damit die Nachstelleinrichtung eine Nachstellung durchführt,
- Aktivieren eines Schlupfsteuerverfahrens der Kupplung,
- Feststellen, ob eine Nachstellung erfolgt ist und
- Aktualisieren des Greifpunktes der Kupplung.

Bei einer vorteilhaften Durchführungsform des erfindungsgemäßen Verfahrens wird die Reibungskupplung von dem Betätigungsglied in ihre Schließstellung gedrückt und die Nachstelleinrichtung wird aktiviert, indem das Betätigungsglied über eine Sollschließstellung der Kupplung hinaus bewegt wird.

Zum Feststellen, dass sich der Fahrzeugantriebsstrang in einem Zustand befindet, in dem ein Nachstellen der Kupplung möglich ist, muss beispielsweise wenigstens einer der folgenden Betriebszustände des Antriebsstrangs vorhanden sein:
- Aufheben der Schlupfsteuerung unkritisch,
- Motormoment kleiner als vorgegebener Wert,
- Drehzahl der Kupplungseingangswelle über einer Minimaldrehzahl,
- Gang ist länger als eine vorbestimmte Zeitdauer geschaltet,
- Schlupf kleiner als ein oberer Grenzwert,
- kein Schaltvorgang aktiviert.

Das Erfordernis einer Nachstellung der Kupplung kann durch die Betriebsdauer der Kupplung bestimmt sein.

Alternativ kann das Erfordernis der Nachstellung der Kupplung durch wenigstens eines der folgenden Ereignisse bestimmt sein:
- Verminderung des bei einer vorbestimmten Betätigung des Betätigungsgliedes übertragbaren Kupplungsmoments,
- Verschiebung des Greifpunktes,
- Verminderung der auf das in einer vorbestimmten Stellung befindliche Betätigungsglied aufzubringenden Kraft,
- ein berechneter Verschleißwert übersteigt einen vorbestimmten Verschleißwert.

Für die Auslösung eines Nachstellvorgangs kann das Betätigungsglied über den Sollverstellbereich hinaus nach einem der folgenden Steuerverfahren bewegt werden: Wegsteuerung, Kraftsteuerung, Geschwindigkeitssteuerung.

Vorteilhaft ist, nach Durchführung einer Nachstellung unter Kombination einer Drehmomentsteuerung und Schlupfsteuerung auf die Schlupfsteuerung überzugehen.

Ob eine Nachstellung erfolgt ist, kann beispielsweise derart überprüft werden, dass wenigstens ein Punkt einer vor der Aktivierung einer Nachstellung gespeicherten Ist-Kupplungskennlinie mit einem Punkte einer nach der Nachstellung vorhandenen Kennlinie verglichen wird.

Die Ist-Kennlinie kann anschließend entsprechend der ermittelten Abweichung adaptiert werden.

Eine Vorrichtung zum Nachstellen einer in einem Fahrzeugantriebsstrang befindlichen, von einem Aktor betätigten Reibungskupplung mit einer Nachstelleinrichtung, die bei Bewegen eines Betätigungsgliedes über einen Verstellbereich hinaus eine einen Reibbelagverschleiß ausgleichende Nachstellung der Kupplung herbeiführt, enthaltend den Aktor zum Betätigen des Betätigungsgliedes, Sensoren zur Ermittlung des Kupplungsschlupfes, des von der Kupplung übertragenen Moments und der Stellung des Betätigungsgliedes und eine elektronische Steuereinrichtung zur Steuerung des Aktors in Abhängigkeit vom Kupplungsschlupf, vom Kupplungsmoment und gegebenenfalls weiteren Betriebsparametern des Antriebsstrangs, welche Steuereinrichtung wenigstens eine Kupplungskennlinie enthält, die das von der Kupplung übertragbare Moment in Abhängigkeit von der Stellung des Betätigungsgliedes enthält und zum Durchführen eines der vorgenannten Verfahren geeignet ist.

In einer vorteilhaften Ausführungsform der erfindungsgemäßen Vorrichtung ist die Kupplung eine in einem Parallelschaltgetriebe enthaltene Kupplung.

Die Erfindung, die für weitgehend alle mit Verschleiß behafteten Reibungskupplungen angewendet werden kann, wird im Folgenden beispielhaft und mit weiteren Einzelheiten anhand einer Kupplung erläutert, wie sie beispielsweise in einem Parallelschaltgetriebe enthalten ist und von einem Aktor in Schließstellung gedrückt wird.

In den Figuren zeigen:
- Figur 1: ein Schema einer Kupplungsbetätigungseinrichtung,
- Figur 2: einen Ausschnitt eines Längsschnittes durch eine Doppelkupplung eines Parallelschaltgetriebes,
- Figur 3: Kupplungskennlinien zur Erläuterung der Wirkung von Verschleißnachstellung,
- Figur 4: Kurven zur Erläuterung einer Nachstellung,
- Figur 5: ein Flussdiagramm zur Erläuterung der Erfindung, und
- Figur 6: einen Last-basierenden und einen Stellungs-basierenden Kupplungshebel.

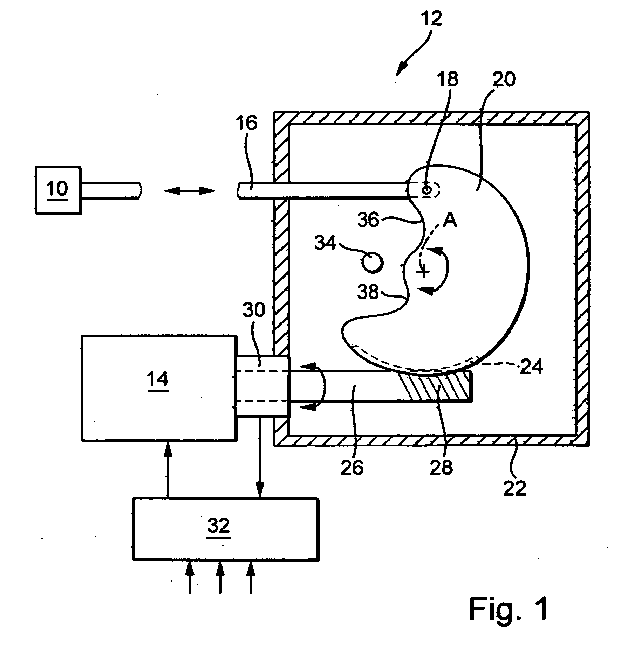

Gemäß Figur 1 ist eine insgesamt mit 10 bezeichnete Kupplung, beispielsweise ein Kupplung eines Parallelschaltgetriebes, über einen insgesamt mit 12 bezeichneten Übertragungsmechanismus mit einem Aktor, im dargestellten Beispiel einem Elektromotor 14, verbunden.

Die Kupplung 10 ist von der an sich bekannten Bauart, bei der die Kupplung in ihren Schließzustand bzw. Drehmoment übertragenden Zustand gegen die Kraft einer kupplungsinternen Öffnungsfeder gedrängt werden muss.

Der Übertragungsmechanismus enthält ein Betätigungsglied 16, das direkt, über weitere Koppelglieder, oder über eine hydraulische Übertragungsstrecke mit einem Kupplungshebel verbunden ist, dessen Stellung das von der Kupplung übertragbare Moment bestimmt.

Das Betätigungsglied 16 ist über ein Lager 18 mit einem Segmentrad 20 verbunden, das um eine Achse A drehbar in einem Gehäuse 22 gelagert ist. Das Gehäuse 22 kann starr mit dem Gehäuse der Kupplung oder einem Getriebegehäuse verbunden sein.

Das Segmentrad 20 weist an einem Umfangsbereich eine Verzahnung 24 auf, die mit einer an einer Ausgangswelle 26 des Elektromotors 14 ausgebildeten Schneckenverzahnung 28 kämmt. Zur Erfassung der Drehung der Ausgangswelle 26 ist ein Inkrementzähler 30 vorgesehen.

Zur Steuerung des Elektromotors 14 dient ein elektronisches Steuergerät 32 mit Mikroprozessor und zugehörigen Speichereinrichtungen, wobei ein Eingang mit dem Inkrementzähler 30 und weitere Eingänge mit Ausgängen von Sensoren oder einem anderen Steuergerät, gegebenenfalls über einen Bus, verbunden sind, über die das Steuergerät 32 mit für den Betrieb der Kupplung 10 relevanten Daten versorgt wird. Ein Ausgang des Steuergeräts 32 ist mit dem Elektromotor 14 verbunden.

Die Drehbarkeit des Segmentrades 20 ist durch wenigstens einen Anschlag 34 begrenzt, an dem eine Anschlagfläche 36 am Ende des Betätigungsweges des Betätigungsgliedes 16 in Schließrichtung der Kupplung anliegt. Die Drehbarkeit des Segmentrades 20 in Öffnungsrichtung der Kupplung 10 ist ebenfalls dadurch begrenzt, dass eine weitere Anschlagfläche 38 in Anlage an den Anschlag 34 kommt.

Der Eingriff zwischen der Schneckenverzahnung 28 und der Verzahnung 24 ist vorteilhafterweise nicht selbsthemmend, so dass die Kupplung 10 bei fehlender Spannungsbeaufschlagung des Elektromotors 14 sich unter der Kraft der nicht dargestellten Öffnungsfeder in der Öffnungsstellung bewegt.

Aufbau und Funktion der beschriebenen Anordnung sind an sich bekannt und werden daher nicht weiter erläutert.

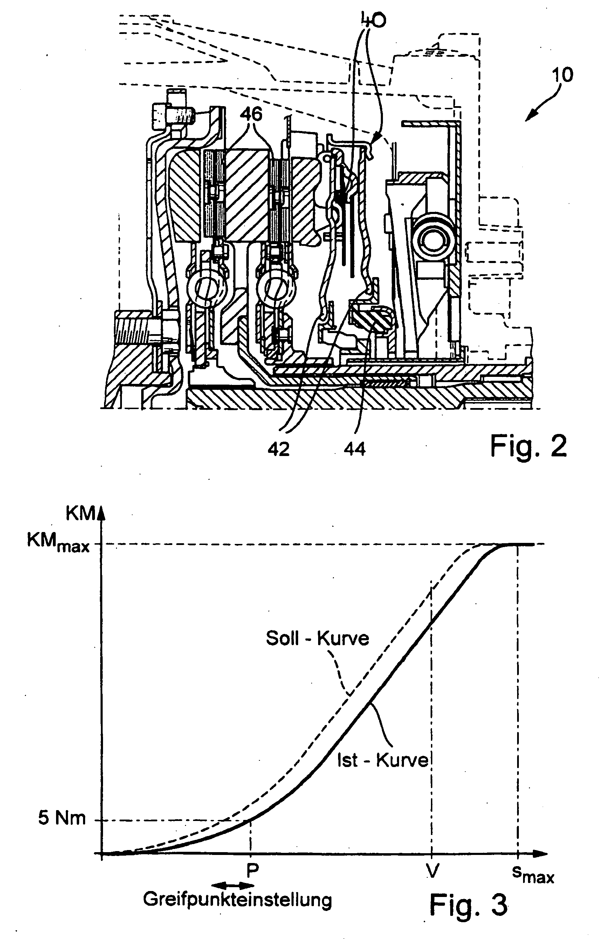

Figur 2 zeigt einen Ausschnitt aus einer an sich bekannten Doppelkupplung 10, wie sie in einem Parallelschaltgetriebe enthalten ist. Eine in diese Doppelkupplung integrierte Nachstelleinrichtung 40 bewegt bei einer Nachstellung eine Hebelfeder 42 nach außen. Eine Nachstellung erfolgt, wenn ein Einrücklager 44 weiter als sein normaler Verstellweg zum vollständigen Schließen der Kupplung bewegt wird (dabei berührt die Anschlagfläche 36 noch nicht den Anschlag 34) und die Reibbeläge 46 für eine Nachstellung ausreichend verschlissen sind. Die Nachstelleinrichtung an sich ist nicht Bestandteil der Erfindung und wird daher nicht näher erläutert.

Figur 3 stellt das Kupplungsmoment KM abhängig von der Verschiebung s des Einrücklagers 46 bzw. des Betätigungsgliedes 16 aus der Offenstellung in Schließrichtung dar. Die gestrichelte Kurve ist eine Sollkurve, die im Steuergerät 32 gespeichert ist und beispielsweise dem Neuzustand der Kupplung entspricht. Diese Sollkurve dient beispielsweise für eine rasche Vorsteuerung der Kupplung. Mit zunehmender Betätigung des Betätigungsgliedes bzw. zunehmenden Wert s steigt das übertragbare Kupplungsmoment KM bis zu einem maximalen Wert KMₘₐₓ an, der auf das maximale, im Antriebsstrang auftretende Moment abgestimmt ist und oberhalb dessen kein Schlupf auftritt. Wenn das Betätigungsglied über die dem maximalen Kupplungsmoment entsprechende Stellung hinaus bewegt wird, tritt die Nachstelleinrichtung 42 (Figur 2) in Funktion. Dies geschieht etwa oberhalb einer Stellung sₘₐₓ des Betätigungsgliedes.

Wenn die Reibbeläge verschleißen, nimmt der Betätigungsweg s, der für ein vorbestimmtes Kupplungsmoment erforderlich ist, zu, d.h. die gestrichelte Sollkurve geht in die durchgezogene Istkurve über.

Wie ersichtlich, verschiebt sich der Greifpunkt P der Kupplung entsprechend dem Kupplungsverschleiß zu zunehmend höheren Verstellwegen s. Der Greifpunkt ist der Punkt, bei dem das übertragbare Kupplungsmoment etwa 5 Nm beträgt. Eine genaue Kenntnis des Greifpunktes ist für eine genaue Kupplungssteuerung erforderlich.

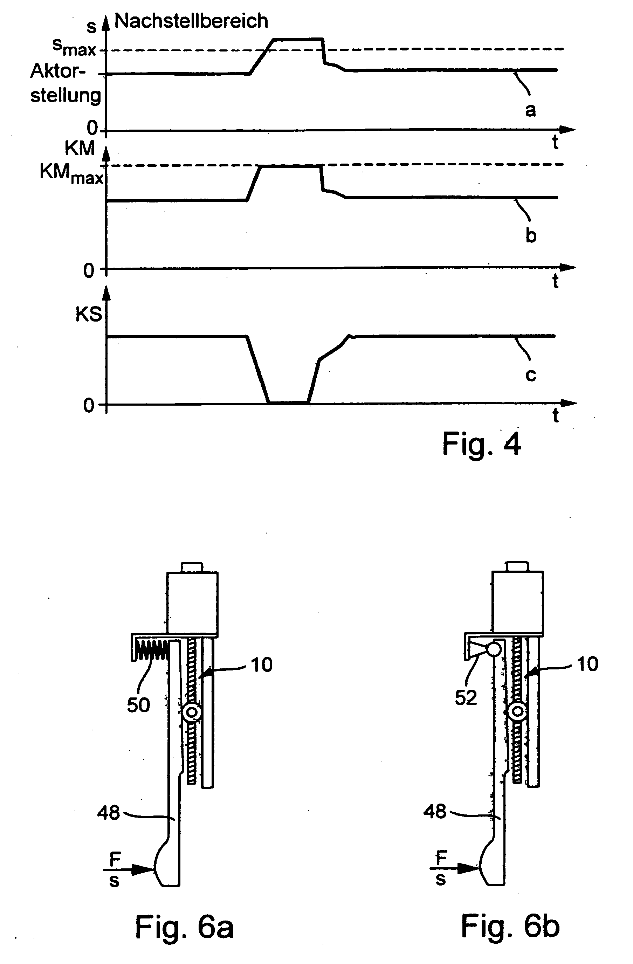

Figur 4 zeigt drei Diagramme zur Erläuterung einiger Funktionen während einer Nachstellung. Für alle Kurven stellt die Waagerechte die Zeit dar. Die Kurve a beschreibt die Stellung s des Betätigungsgliedes bzw. des Einrücklagers im Zeitverlauf. Bei Überschreiten des Wertes sₘₐₓ findet eine Nachstellung statt. Die Kurve b beschreibt das Kupplungsmoment KM. Während der Nachstellung ist das maximale Kupplungsmoment KMₘₐₓ übertragbar.

Die Kurve c beschreibt den Kupplungsschlupf KS. Vor und nach der Nachstellung wird die Kupplung mit Schlupf betrieben. Während der Nachstellung ist kein Schlupf vorhanden.

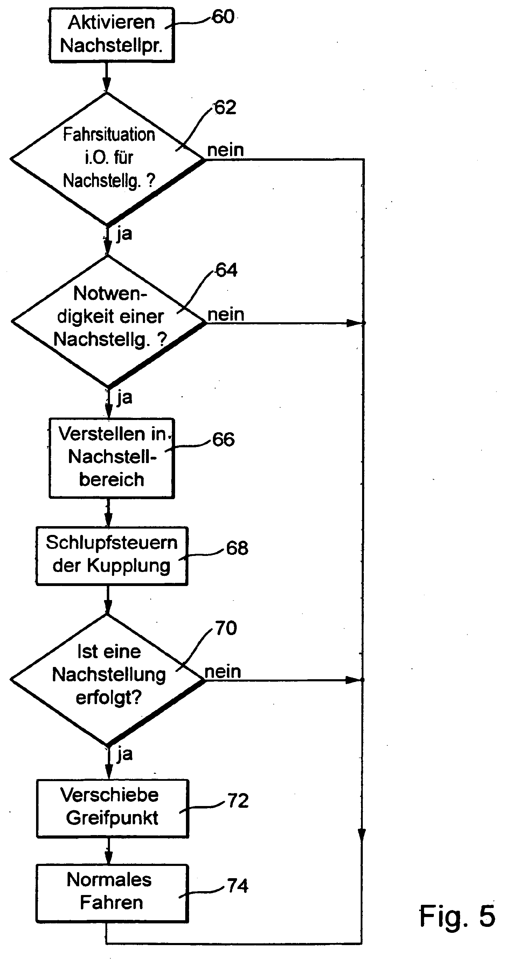

Im Folgenden wird die Erfindung anhand des Flussdiagramms gemäß Figur 5 beispielsweise beschrieben.

Sei angenommen, dass das Fahrzeug in einem Vorwärtsgang vorwärts fährt und im Schritt 60 ein Nachstellprogramm aktiviert wird, innerhalb dessen die Kupplung für einen Verschleißausgleich nachgestellt werden soll. Dieses Aktivieren kann beispielsweise routinemäßig gesteuert erfolgen oder nach jeder Inbetriebsetzung des Fahrzeugs.

Im Schritt 62 wird überprüft, ob die bestehende Fahrsituation für eine Nachstellung geeignet ist. Eine Nachstellung, bei der die Kupplung, wie aus den Figuren 3 und 4 ersichtlich, in einen sicher schlupffreien Zustand gebracht wird und das Betätigungsglied über den normalen Verstellweg für die Kupplung hinaus bewegt wird, ist möglich, wenn vorbestimmte Bedingungen erfüllt sind:
- Moderne Kupplungen werden häufig unter Schlupfsteuerung betrieben, d.h. sie werden derart gesteuert, dass ein vorbestimmter, von jeweiligen Betriebspunkten abhängiger Schlupf vorliegt, mit dem Drehungleichförmigkeiten ausgeglichen werden, wie sie beispielsweise beim Fahren mit sehr niedrigen Drehzahlen vorliegen oder beim Schalten je nach der gewünschten Beschleunigung und dem Komfort gesteuert werden. Ein Nachstellen, während dessen die Kupplung in den schlupffreien Zustand gelangt, ist daher nur möglich, wenn ein Aufheben der Schlupfsteuerung unkritisch ist, d.h. zu keinen Komfortbeeinträchtigungen führt. Dazu zählt auch ein mögliches Verzahnungsrattern, das bei niedrigen Drehzahlen und aufgehobenem Schlupf auftreten kann.
- Die Drehzahl der Eingangswelle der Kupplung sollte während der Nachstellung über einer Minimaldrehzahl liegen.
- Ebenso sollte die Motordrehzahl über einer Minimaldrehzahl liegen.
- Das Motormoment sollte kleiner sein als ein vorgegebener Wert, der von der Drehzahl abhängig sein kann und mit steigender Drehzahl zunimmt.
- Der Gang, in dem gerade gefahren wird, sollte bereits länger als eine vorbestimmte Zeitdauer geschaltet sein.
- Der Schlupf, mit dem die Kupplung läuft, sollte kleiner sein als ein oberer Grenzwert. Damit ist sichergestellt, dass ein plötzliches Aufheben des Schlupfes zu keinen unerwünschten Komfortbeeinträchtigungen führt.
- Es sollte kein Schaltvorgang aktiviert sein.

Die vorstehenden Bedingungen müssen nicht alle gleichzeitig erfüllt sein. Vorteilhaft ist jedoch, wenn mehrere von ihnen erfüllt sind, da dies darauf hindeutet, dass eine Kupplungsnachstellung bzw. ein Verschleißausgleich zu keinen unerwünschten Komfortbeeinträchtigungen führt.

In einem weiteren Schritt 64 wird dann überprüft, ob eine Kupplungsnachstellung erforderlich ist. Für diese Überprüfung gibt es beispielsweise zwei Möglichkeiten, die einzeln oder in Kombination eingesetzt werden können:
- Zeit-basiert
   Bei einer Zeit basierten Entscheidung über die Notwendigkeit einer Nachstellung entscheidet beispielsweise eine seit einer letzten Nachstellung abgelaufene, vorbestimmte Betriebsdauer der Kupplung, die in dem Steuergerät 32 gespeichert ist, darüber, dass eine weitere Nachstellung erforderlich ist bzw. versucht werden sollte.
- Ereignis-gesteuert
   Bei einer Ereignissteuerung hängt die Durchführung einer Nachstellung von Ereignissen ab, die auf die Notwendigkeit einer Nachstellung hindeuten und vom Steuergerät identifiziert werden. Beispiele solcher Ereignisse sind:
   - vermindertes berechnetes maximal übertragbares Kupplungsmoment;
   - Basierend auf den augenblicklichen Greifpunkt und dem Reibwert der Kupplung sowie dem im Steuergerät abgelegten Verstellwegende V (Figur 3) des Betätigungsgliedes sinkt mit zunehmendem Verschleiß das berechnete, maximal übertragbare Kupplungsmoment. Weiter deutet eine Verschiebung des Greifpunktes bzw. eine Verminderung des bei konstantem Greifpunkt übertragbaren Kupplungsmoments auf einen Verschleiß der Reibbeläge.
   - Bei zunehmendem Verschleiß nimmt die Vorsteuerspannung ab, mit der der Aktor beaufschlagt werden muss, damit das Betätigungsglied eine vorbestimmte Stellung erreicht. Wenn diese Abnahme eine vorbestimmte Größe erreicht, deutet dies auf die Notwendigkeit einer Nachstellung.
   - Schließlich kann ein Ereignis, das auf die Notwendigkeit einer Nachstellung deutet, darin liegen, dass ein berechneter Verschleiß einen vorbestimmten Wert übersteigt. Der Verschleiß der Reibbeläge kann nach einem Modell berechnet werden, das ein oder mehrere der folgenden Größen enthält: von der Kupplung übertragenes Moment, Schlupf, Temperatur der Kupplung.

Es versteht sich, dass die Schritte 62 und 64 in umgekehrter Reihenfolge durchgeführt werden können, d.h., dass zunächst die Notwendigkeit einer Nachstellung geprüft wird und dann ermittelt wird, ob die Fahrsituation eine Nachstellung zulässt. Der Schritt 64 kann auch ganz am Anfang des Programms stehen und ein Nachstellprogramm aktivieren.

Wenn entschieden ist, dass eine Nachstellung erfolgen soll, wird im Schritt 66 das Einrücklager oder ein anderes Stellglied der Kupplung mittels des Betätigungsgliedes über den normalen Verstellbereich hinaus in eine Stellung bewegt, in der mit der kupplungsinternen Nachstelleinrichtung eine Verstellung erfolgt. Die kupplungsinterne Nachstelleinrichtung muss nicht zwingend selbsttätig ablaufen, sondern kann mit Hilfe weiterer Aktoren durchgeführt werden. Sie kann auch derart erfolgen, dass im Betätigungsweg die wirksame Länge eines Bauteils verstellt wird.

Die Bewegung des Betätigungsgliedes aus dem Sollverstellbereich hinaus in die Stellung, in der bei ausreichendem Verschleiß eine Nachstellung erfolgt, und die beispielsweise nahe an der Stellung sein kann, an der der Anschlag 34 (Figur 1) eine weitere Bewegung des Betätigungsglieds 16 begrenzt, kann unter unterschiedlichen Steuerverfahren erfolgen:
- Wegsteuerung
   Die Stellung sₘₐₓ (Figur 3), bei der eine Nachstellung erfolgt, ist beispielsweise im Steuergerät als Zielstellung abgelegt, zu der das Betätigungsglied im Schritt 66 bewegt wird. Der Vorteil dieser Strategie liegt darin, dass die Stellung des Betätigungsgliedes bekannt und immer gleich ist. Der Nachteil ist, dass unter bestimmten Umständen das Betätigungsglied nicht weit genug bewegt wird, um eine Nachstellung auszulösen, oder aber in diese Stellung aufgrund mechanischer Beschränkungen des Systems nicht bewegt werden kann, so dass der Elektromotor 10 überlastet wird.
- Spannungssteuerung
   Eine spannungsgesteuerte Bewegung in die Nachstellstellung kann beispielsweise in Verbindung mit einer minimal einzuhaltenden Geschwindigkeit verwendet werden, um einen harten Anschlag festzustellen. Der Vorteil der Spannungssteuerung liegt darin, dass das Risiko vermindert wird, dass das Betätigungsglied eine zu kurze oder zu lange Wegstrecke zurücklegt. Der Nachteil liegt darin, dass die Endstellung des Betätigungsgliedes unterschiedlich ist, da sie vom Verschleiß der Kupplungsbeläge, der Reibung im System und weiteren, auf den Aktor 10 wirkenden Kräften abhängt.
- Geschwindigkeitssteuerung
   Eine geschwindigkeitsgesteuerte Bewegung ist ähnlich einer spannungsgesteuerten Bewegung, wobei lediglich die Steuerparameter unterschiedlich sind. Ein harter Anschlag wird durch Einstellen einer maximal zulässigen Spannung erkannt, die beim Anschlag überschritten wird.

Nachdem das Betätigungsglied bzw. das Einrücklager im Schritt 66 in die Nachstellstellung bzw. den Nachstellstellbereich bewegt wurde, geht das Programm in Schritt 68 zur Schlupfsteuerung der Kupplung über, wobei das Betätigungsglied wieder in den normalen Verstellbereich der Kupplung bewegt wird und der Schlupf der Kupplung gesteuert wird. Grund für den Übergang zur Schlupfsteuerung ist, dass damit festgestellt werden kann, ob bei Durchführung des Schrittes 66 tatsächlich eine Nachstellung erfolgt ist. Diese Nachstellung bewirkt eine Verschiebung der Kupplungsmomentkurve (Figur 3) von der durchgezogenen Kurve zu der gestrichelten Kurve, so dass bei einer Rückkehr des Betätigungsgliedes in eine Stellung, bei der vor der Nachstellung ein bestimmtes Kupplungsmoment übertragbar war und sich die Kupplung im Schlupfzustand befand, nach der Nachstellung ein höheres Moment übertragen werden kann und die Kupplung nicht schlupfen würde. Ein Nachteil der reinen Schlupfsteuerung bei der Rückkehr in den normalen Verstellbereich liegt darin, dass die Kupplung langsamer in den normalen Betriebsmode übergeht als wenn das alte Kupplungsmoment oder Motormoment angefahren würden. Vorteilhaft ist daher die Kombination einer Drehmomentsteuerung und Schlupfsteuerung, wodurch zunächst das Betätigungsglied rasch in Richtung der alten Stellung zurückbewegt wird und dann gegen Ende der Rückkehr zum normalen Betriebszustand unter Schlupfsteuerung erfolgen kann.

Sobald die Kupplungssteuerung sich im Schritt 68 stabilisiert hat und ein konstanter Schlupf aufrechterhalten werden kann, muss geprüft werden, ob eine Nachstellung der Kupplung erfolgt ist. Wenn dies der Fall ist, ist eine Verschiebung der Hebelfeder relativ zu dem Einrücklager 46 erfolgt (Figur 2), was zu einer entsprechenden Verschiebung der Kupplungskennlinie führt.

Wenn im Schritt 70 festgestellt wurde, dass eine Nachstellung erfolgt ist, wird der Greifpunkt und damit die gesamte aktuelle Kupplungskennlinie (durchgezogene Linie der Figur 3) derart verschoben, dass der neue Greifpunkt wiederum einem übertragbaren Kupplungsmoment von 5 Nm entspricht, so dass - vorausgesetzt, der Reibungskoeffizient hat sich nicht verändert - im Steuergerät als neue Istkurve, die insbesondere der raschen Vorsteuerung der Kupplung dient, eine Kurve gespeichert wird, die in Richtung der ursprünglichen Sollkurve hin verändert ist oder dieser entspricht.

Eine Verschiebung der Ist-Kennlinie gegenüber der Soll-Kennlinie (Figur 3) kann sowohl durch Verschleiß als auch durch eine Veränderung des Reibwertes der Reibbeläge verursacht sein. Eine solche Veränderung wird normalerweise dadurch kompensiert, dass bei einem vorbestimmten, hohen Motormoment ein vorbestimmter Sollschlupf eingestellt wird und die dazugehörende Stellung des Betätigungsgliedes als neue Sollstellung aktualisiert wird.

Die Nachstellung der Kupplungskennlinie infolge einer Verschleißnachstellung erfolgt zweckmäßigerweise bezogen auf den Greifpunkt, wo die veränderte Iststellung des Betätigungsgliedes wieder auf die Sollstellung gebracht wird, indem ein Betriebspunkt von 5 Nm angefahren wird oder, sofern dies nicht möglich ist, die Istkurve bei einem anderen Motormoment in Übereinstimmung mit der Sollkurve gebracht wird. Die Beziehung zwischen der Verschiebung des Einrücklagers und der Stellung des Betätigungsgliedes hängt davon ab, ob die Wirkung einer Veränderung der Stellung des Betätigungsgliedes auf die Kupplung Lastbasierend oder Stellungs-basierend ist. Figur 6 zeigt unter a eine Last-basierende Einwirkung eines Kupplungshebels 48 auf die Kupplung 10 und unter b eine Stellungs-basierende Einwirkung der Stellung des Kupplungshebels auf die Kupplung 10. Wie ersichtlich, stützt sich der jeweils zweiarmige Kupplungshebel 48 im Falle der Lastbasierung an einer Feder 50 ab, wohingegen er sich Stellungs-basiert an seinem von der Einwirkung einer Kraft F bzw. einer Verschiebung s entfernten Ende an einem Gegenlager 52 abstützt. Die Art der Kupplungsbetätigung wird in der Software entsprechend berücksichtigt.

Zusammenfassend wird mit der Erfindung eine Möglichkeit geschaffen, den Verschleiß von Reibbelägen einer Reibungskupplung auszugleichen. Wenn nach einer kupplungsinternen Nachstellung des Verschleißes, die beispielsweise durch Betätigen eines Betätigungsgliedes über den normalen Stellbereich der Kupplung hinaus erfolgt, wieder auf Normalbetrieb übergegangen wird, bei dem ein konstanter Schlupf aufrechterhalten wird, kann überprüft werden, ob eine Nachstellung tatsächlich erfolgt ist. Dies kann dadurch geschehen, dass das berechnete Kupplungsmoment bei einer bestimmten Stellung des Betätigungsgliedes (basierend auf einem Greifpunkt und einem Reibkoeffizienten, der vor der Nachstellung ermittelt wurde) mit dem berechneten tatsächlichen Moment bei dieser Stellung (vom Motormoment hergeleitet) verglichen wird. Der Unterschied zwischen den beiden Werten würde normalerweise eine Änderung dem Reibkoeffizienten der Kupplung zugerechnet, aber bei einer Nachstellung kann er durch eine Verschiebung der Kupplungskurve hervorgerufen sein, die kompensiert werden muss, indem der Greifpunkt verschoben wird. Wenn die voraussichtliche Verschiebung des Greifpunktes über einem vorbestimmten Schwellenwert liegt, kann entschieden werden, dass eine Nachstellung der Kupplung erfolgt ist und der Greifpunkt kann entsprechend verschoben werden. Die Verschiebung des Greifpunktes kann basierend auf der Verschiebung an einer Stelle mit höherem Moment bestimmt werden, wenn zwischen der Stellung des Betätigungsgliedes und der Stellung des Kupplungseinrücklagers eine konstante Beziehung vorliegt. Wenn diese konstante Beziehung nicht vorliegt, kann ein Offset-Wert (ein konstanter Wert oder ein auf einer Kennlinie basierender Wert) bei der Greifpunktverstellung zusätzlich berücksichtigt werden.

### Bezugszeichenliste

- 4: Hebelfeder
- 10: Kupplung
- 12: Übertragungsmechanismus
- 14: Elektromotor
- 16: Betätigungsglied
- 18: Lager
- 20: Segmentrad
- 22: Gehäuse
- 24: Verzahnung
- 26: Ausgangswelle
- 28: Schneckenverzahnung
- 30: Inkrementzähler
- 32: Steuergerät
- 34: Anschlag
- 36: Anschlagfläche
- 38: Anschlagfläche
- 40: Nachstelleinrichtung
- 42: Hebelfeder
- 44: Einrücklager
- 46: Reibbelag
- 48: Kupplungshebel
- 50: Feder
- 52: Gegenlager

## Patentansprüche

1. Verfahren zum Nachstellen einer in einem Fahrzeugantriebsstrang befindlichen, von einem Aktor in Schließrichtung betätigten Reibungskupplung (10), welche Reibungskupplung eine Nachstelleinrichtung (40) enthält, die bei Bewegen eines Betätigungsgliedes (16) über einen Verstellbereich hinaus eine einen Reibbelagverschleiß ausgleichende Nachstellung der Kupplung herbeiführt, welches Verfahren folgende Schritte enthält:
- Feststellen, ob sich der Fahrzeugantriebsstrang in einem Zustand befindet, in dem ein Nachstellen der Kupplung (10) möglich ist,
- Feststellen, ob ein Nachstellen der Kupplung (10) erforderlich ist,
- Bewegen des Betätigungsgliedes (16) über einen Sollverstellbereich hinaus, damit die Nachstelleinrichtung (40) eine Nachstellung durchführt,
- Aktivieren eines Schlupfsteuerverfahrens der Kupplung (10),
- Feststellen, ob eine Nachstellung erfolgt ist und
- Aktualisieren des Greifpunktes der Kupplung (10),
wobei zum Feststellen, dass sich der Fahrzeugantriebsstrang in einem Zustand befindet, in dem ein Nachstellen der Kupplung (10) möglich ist, wenigstens einer der folgenden Betriebszustände des Antriebsstrangs vorhanden ist:
- Aufheben der Schlupfsteuerung bezüglich einer Komfortbeeinträchtigung unkritisch,
- Motormoment kleiner als vorgegebener Wert,
- Drehzahl der Kupplungseingangswelle über einer Minimaldrehzahl,
- Gang ist länger als eine vorbestimmte Zeitdauer geschaltet,
- Schlupf kleiner als ein oberer Grenzwert,
- kein Schaltvorgang aktiviert,
wobei das Erfordernis der Nachstellung der Kupplung (10) durch wenigstens eines der folgenden Ereignisse bestimmt wird:
- Verminderung des bei einer vorbestimmten Betätigung des Betätigungsgliedes übertragbaren Kupplungsmoments,
- Verschiebung des Greifpunktes,
- Verminderung der auf das in einer vorbestimmten Stellung befindliche Betätigungsglied aufzubringenden Kraft,
- ein berechneter Verschleißwert übersteigt einen vorbestimmten Verschleißwert
- durch die Betriebsdauer der Kupplung (10)
und wobei festgestellt wird, ob eine Nachstellung erfolgt ist, indem wenigstens ein Punkt einer vor der Aktivierung einer Nachstellung gespeicherten Ist-Kupplungskennlinie mit einem Punkt einer nach der Nachstellung vorhandenen Kennlinie verglichen wird.

2. Verfahren nach Anspruch 1, wobei das Betätigungsglied (16) über den Sollverstellbereich nach einem der folgenden Steuerverfahren bewegt wird: Wegsteuerung, Kraftsteuerung, Geschwindigkeitssteuerung.

3. Verfahren nach einem der Ansprüche 1 oder 2, wobei nach Durchführung einer Nachstellung unter Kombination einer Drehmomentsteuerung und Schlupfsteuerung auf die Schlupfsteuerung übergegangen wird.

4. Verfahren nach einem der Ansprüche 1 bis 3, wobei die Ist-Kennlinie entsprechend der ermittelten Abweichung adaptiert wird.

5. Vorrichtung zum Nachstellen einer in einem Fahrzeugantriebsstrang befindlichen, von einem Aktor (14) in Schließrichtung betätigten Reibungskupplung (10) mit einer Nachstelleinrichtung, die bei Bewegen eines Betätigungsgliedes über einen Verstellbereich hinaus eine einen Reibbelagverschleiß ausgleichende Nachstellung der Kupplung herbeiführt, enthaltend
den Aktor (14) zum Betätigen des Betätigungsgliedes (16),
Sensoren zur Ermittlung des Kupplungsschlupfes, des von der Kupplung (10) übertragenen Moments und der Stellung des Betätigungsgliedes und eine elektronische Steuereinrichtung (32) zur Steuerung des Aktors in Abhängigkeit vom Kupplungsschlupf, vom Kupplungsmoment und gegebenenfalls weiteren Betriebsparametern des Antriebsstrangs, welche Steuereinrichtung wenigstens eine Kupplungskennlinie enthält, die das von der Kupplung übertragbare Moment in Abhängigkeit von der Stellung des Betätigungsgliedes enthält, und in der ein der Verfahren gemäß den Ansprüchen 1 bis 4 durchgeführt wird.

6. Vorrichtung nach Anspruch 5, wobei die Kupplung (10) eine in einem Parallelschaltgetriebe enthaltene Kupplung (10) ist.

## Claims

1. Method for readjusting a friction clutch (10) which is situated in a vehicle drivetrain and which is actuated in the closing direction by an actuator, which friction clutch comprises a readjusting device (40) which, in the event of an actuating element (16) moving beyond an adjustment range, effects a readjustment, which compensates friction lining wear, of the clutch, which method comprises the following steps:
- determining whether the vehicle drivetrain is in a state in which a readjustment of the clutch (10) is possible,
- determining whether a readjustment of the clutch (10) is necessary,
- moving the actuating element (16) beyond a nominal adjustment range such that the readjustment device (40) carries out a readjustment,
- activating a slip control process of the clutch (10),
- determining whether a readjustment has taken place and
- updating the biting point of the clutch (10), wherein, to determine that the vehicle drivetrain is in a state in which a readjustment of the clutch (10) is possible, at least one of the following states of operation of the drivetrain is present:
- deactivating the slip control non-critical with regard to an impairment of comfort,
- engine torque is lower than a predefined value,
- rotational speed of the clutch input shaft is greater than a minimum rotational speed,
- gear is selected longer than a predetermined time duration,
- slip is lower than an upper limit value,
- no shift process is active,
wherein the requirement for a readjustment of the clutch (10) is determined by means of at least one of the following events:
- a reduction in the clutch torque which can be transmitted during a predetermined actuation of the actuating element,
- a displacement of the biting point,
- a reduction of the force to be applied to the actuating element when it is in a predetermined position,
- a calculated wear value exceeds a predetermined wear value,
- by means of the operating duration of the clutch (10),
and wherein it is determined whether a readjustment has taken place by virtue of at least one point of an actual clutch characteristic curve stored before the activation of a readjustment being compared with a point of a characteristic curve present after the readjustment.

2. Method according to Claim 1, with the actuating element (16) being moved beyond the nominal adjustment range according to one of the following control methods: travel control, force control, speed control.

3. Method according to one of Claims 1 or 2, with a transition being made to slip control after a readjustment is carried out using a combination of torque control and slip control.

4. Method according to one of Claims 1 to 3, with the actual characteristic curve being adapted corresponding to the determined deviation.

5. Device for readjusting a friction clutch (10) which is situated in a vehicle drivetrain and which is actuated in the closing direction by an actuator (14), having a readjusting device which, in the event of an actuating element (16) moving beyond an adjustment range, effects a readjustment, which compensates friction lining wear, of the clutch, comprising
the actuator (14) for actuating the actuating element (16),
sensors for determining the clutch slip, the torque transmitted by the clutch (10) and the position of the actuating element, and
an electronic control device (32) for controlling the actuator as a function of the clutch slip, the clutch torque and if appropriate further operating parameters of the drivetrain, which control device comprises at least one clutch characteristic curve which contains, as a function of the position of the actuating element, the torque which can be transmitted by the clutch, and in which control device the method according to one of Claims 1 to 4 is carried out.

6. Device according to Claim 5, with the clutch (10) being a clutch (10) which is contained in a parallel shift transmission.

## Revendications

1. Procédé pour réajuster un embrayage à friction (10) situé dans une chaîne cinétique d'un véhicule, activé par un actionneur en direction de fermeture, ledit embrayage à friction comprenant un dispositif de réajustage (40), qui lors du déplacement d'un organe de manoeuvre (16) au-delà d'une plage de réglage provoque un réajustage compensant une usure des garnitures de friction, ledit procédé comportant les étapes suivantes :
- constater si la chaîne cinétique du véhicule se trouve dans un état dans lequel un réajustage de l'embrayage (10) est possible
- constater si un réajustage de l'embrayage (10) est nécessaire,
- déplacer l'organe de manoeuvre (16) au-delà d'une plage de réglage de consigne, pour que le dispositif de réajustage (40) procède à un réajustage,
- activer un procédé de commande de patinage de l'embrayage (10),
- constater si un réajustage s'effectue et
- remettre à jour le point d'engagement de l'embrayage (10),
au moins l'un des états de service suivants de la chaîne cinétique étant présents, pour constater que la chaîne cinétique du véhicule se trouve dans un état dans lequel un réajustage de l'embrayage (10) est possible :
- annulation de la commande de patinage au niveau d'une entrave au confort non critique,
- couple moteur inférieur à la valeur prédéfinie,
- vitesse de rotation de l'arbre primaire de l'embrayage au-delà d'une vitesse de rotation minimale,
- la vitesse est passée plus longtemps qu'une période prédéfinie,
- le patinage est inférieur à une valeur limite supérieure,
- aucun passage de vitesse activé,
le besoin de réajuster l'embrayage (10) étant déterminé par au moins l'un des événements suivants :
- réduction du couple d'embrayage transmissible lors d'un actionnement prédéfini de l'organe de manoeuvre,
- déplacement du point d'engagement,
- réduction de la force devant être appliquée sur l'organe de manoeuvre se trouvant dans une position prédéfinie,
- une valeur d'usure calculée dépasse une valeur d'usure prédéfinie,
- par la durée de fonctionnement de l'embrayage (10),
et étant constaté si un réajustage a été effectué en ce qu'au moins un point d'une courbe caractéristique réelle de l'embrayage, mémorisée avant l'activation d'un réajustage, est comparé avec un point d'une courbe caractéristique présente après le réajustage.

2. Procédé selon la revendication 1, l'organe de manoeuvre (16) étant déplacé au-delà de la plage de réglage de consigne, après l'un des procédés de commande suivants : commande desmodromique, commande de la puissance, commande de la vitesse.

3. Procédé selon l'une quelconque des revendications 1 à 2, dans lequel après la réalisation d'un réajustage, on passe à la commande du patinage, en associant une commande du couple et une commande du patinage.

4. Procédé selon l'une quelconque des revendications 1 à 3, la courbe caractéristique réelle étant adaptée en fonction de l'écart déterminé.

5. Dispositif pour réajuster un embrayage à friction (10) situé dans une chaîne cinétique d'un véhicule, activé par un actionneur (14) en direction de fermeture, avec un dispositif de réajustage, qui lors du déplacement d'un organe de manoeuvre au-delà d'une plage de réglage provoque un réajustage compensant une usure des garnitures de friction, comprenant
l'actionneur (14) pour actionner l'organe de manoeuvre (16),
des capteurs, pour déterminer le patinage de l'embrayage, le couple transmis par l'embrayage (10) et la position de l'organe de manoeuvre et
un dispositif de commande électronique (32) pour commander l'actionneur en fonction du patinage de l'embrayage, du couple d'embrayage et le cas échéant d'autres paramètres de service de la chaîne cinétique, ledit dispositif de commande contenant au moins une courbe caractéristique d'embrayage, qui contient le couple transmis par l'embrayage en fonction de la position de l'organe de manoeuvre et dans lequel est réalisé un procédé selon les revendications 1 à 4.

6. Dispositif selon la revendication 5, l'embrayage (10) étant un embrayage (10) contenu dans une boîte de vitesses parallèle.
